# EUROPÄISCHE PATENTANMELDUNG

(11) **EP 2 921 291 A1**
(43) Veröffentlichungstag der Anmeldung: **23.09.2015**
(21) Anmeldenummer: 15157612.1
(22) Anmeldetag: 04.03.2015
(51) Int. Cl.: B29C 70/70, B29C 70/88, B29C 43/18, B29C 70/34

(54) **Kurbelarm für ein Fahrrad-Tretkurbelsystem und Herstellungsverfahren dafür**

(30) Priorität: 18.03.2014 DE 102014103701
(71) Anmelder: Faupel, Holger, 37412 Herzberg am Harz (DE)
(72) Erfinder: Faupel, Holger, 37412 Herzberg am Harz (DE)
(74) Vertreter: Schneider, Peter Christian

(57) **Zusammenfassung**

Die Erfindung bezieht sich auf ein Kurbelarm für ein Fahrrad-Tretkurbelsystem, umfassend einen länglichen Hohlkern (30) aus einem ersten faserverstärkten Kunststoff und mit einer in Montageendlage des Tretkurbelsystems lateral außen liegenden Vorderfläche, einer dieser gegenüberliegenden Rückfläche und zwei die Vorderfläche und die Rückfläche miteinander verbindenden Seitenflächen (102), der an seinen axialen Enden (104, 105) zueinander sowie zu den Seitenflächen (102) parallel ausgerichtete, metallische Aufnahmehülsen (20, 22) zur Aufnahme einer Tretlagerwelle oder einer Pedalachse trägt, wobei der Hohlkern (30) mit einem zweiten faserverstärkten Kunststoff ummantelt ist,

Die Erfindung zeichnet sich dadurch aus, dass der Hohlkern (30) in Axialrichtung mehrfach mit einem an den in Axialrichtung konvex gewölbten Seitenflächen anliegenden Kohlefaserfaden (50) umwickelt und stoffschlüssig mit diesem verbunden ist.

## Beschreibung

### Gebiet der Erfindung

Die Erfindung bezieht sich auf einen Kurbelarm für ein Fahrrad-Tretkurbelsystem, umfassend einen länglichen Hohlkern aus einem ersten faserverstärkten Kunststoff und mit einer in Montageendlage des Tretkurbelsystems lateral außen liegenden Vorderfläche, einer dieser gegenüberliegenden Rückfläche und zwei die Vorderfläche und die Rückfläche miteinander verbindenden Seitenflächen, der an seinen axialen Enden zueinander sowie zu den Seitenflächen parallel ausgerichtete, metallische Aufnahmehülsen zur Aufnahme einer Tretlagerwelle oder einer Pedalachse trägt, wobei der Hohlkern mit einem zweiten faserverstärkten Kunststoff ummantelt ist.

Die Erfindung bezieht sich weiter auf ein Herstellungsverfahren für einen derartigen Kurbelarm.

### Stand der Technik

Derartige Kurbelarme und Verfahren zu ihrer Herstellung sind bekannt aus der DE 602 22 348 T2.

Tretkurbelsysteme für Fahrräder umfassen bekanntermaßen ein an zentraler Stelle im Fahrradrahmen eingebautes Tretlager, auf dessen Tretlagerwelle beidseitig Kurbeln aufgesteckt sind. Jede Kurbel umfasst einen Kurbelarm, der an einem axialen Ende mittels einer Aufnahmehülse drehfest an der Lagerwelle befestigt ist und an seinem anderen axialen Ende eine weitere Aufnahmehülse zur drehfesten Aufnahme einer Pedalachse aufweist. Die antriebsseitige Kurbel weist üblicherweise zudem einen sogenannten Kurbelstern auf, der als Träger für ein oder mehrere Kettenblätter dient. Es sind Varianten bekannt, bei denen der antriebsseitige Kurbelarm einstückig mit dem Kurbelstern ausgebildet ist; es sind jedoch auch Varianten mit separater Ausbildung von Kurbelarm und Kurbelstern bekannt.

Als wesentliche Schnittstelle zum Fahrer ist das Tretkurbelsystem erheblichen mechanischen Belastungen ausgesetzt und muss daher entsprechend stabil ausgebildet sein. Dies gilt insbesondere für die als Hebel wirkenden Kurbelarme. Andererseits wird, insbesondere im Bereich des Radsports, die Forderung nach einer möglichst leichten Ausgestaltung sämtlicher Komponenten, d.h. auch des Tretkurbelsystems und insbesondere der Kurbelarme, erhoben. Dies stellt einen wesentlichen Zielkonflikt dar, dem sich die Hersteller mit verschiedenen Ansätzen nähern.

Aus der oben genannten, gattungsbildenden Druckschrift ist es bekannt, ein röhrenförmiges Element aus einer faserverstärkten Kunststoffmatrix als Hohlkern eines Kurbelarms zu verwenden. An seinen beiden axialen Enden trägt dieser Hohlkern die beiden Aufnahmehülsen, die mit ihm durch einen formschlüssigen Einsteckmechanismus verbunden sind. Der so vorbereitete Hohlkern wird alsdann zusammen mit einem Gemisch aus gerichteten Kohlefasern und einem wärmeaushärtbaren Kunststoff in eine aus zwei Halbformen bestehende Hohlform eingelegt. Unter Druck und Hitze werden die beiden Halbformen zusammengepresst, sodass der Hohlkern von dem noch plastischen Kunststoff umflossen wird, um alsdann unter Druck bei einer vorgegebenen Aushärtetemperatur auszuhärten. Zwar offenbart die genannte Druckschrift auch die Verwendung ungerichteter Kohlefasern; die Erfahrung lehrt jedoch, dass derartige Ansätze im Zusammenhang mit dem bekannten Verfahren nicht zu den gewünschten Stabilitäten führt. Der Prozess erfordert daher viel Handarbeit und ist somit teuer.

Aus der DE 602 09 962 T2 ist ein weiteres Verfahren zur Herstellung eines Kurbelarms mit einem Hohlkern bekannt, welches jedoch noch mehr Handarbeit erfordert. Hier wird der Kurbelarm durch Umwickeln eines Vollkörpers samt seiner Anbauteile, insbesondere der Aufnahmehülsen, mit einem Kohlefasergewebe spiralig und im Wesentlichen quer zu seiner Längserstreckungsrichtung vorbereitet. Anschließend werden weitere, schalenartige Kohlefaser-Gewebelagen aufgelegt und mit geeigneten Harzen getränkt. Anschließend wird das Ganze unter Druck und Hitze ausgehärtet, wobei der beispielsweise aus Sand und nicht-hitzebeständigem Kunstharz gebildete Vollkörper zerfällt und durch eine eigens hierfür belassene Öffnung herausrieseln kann.

Aus der EP 1 486 413 A2 sind Kurbelarme bekannt bei deren Herstellung die jeweils zwei Aufnahmehülsen mit kontinuierlichen Kohlefasern schlaufenartig umwickelt und alsdann zusammen mit einem Gemisch aus gerichteten Kohlefasern und einem wärmeaushärtbaren Kunststoff in eine aus zwei Halbformen bestehende Hohlform eingelegt werden. Mit anderen Worten handelt es sich hier im Wesentlichen um das aus der oben beschriebenen DE 602 09 962 T2 bekannte Verfahren, wobei anstelle des röhrenförmigen Hohlkerns eine lockere, mehrlagige Schlaufe aus langen Kohlefasern verwendet wird. Aufgrund des hohen Arbeitsaufwandes sind diese Verfahren sehr teuer. Kostengünstigere, automatisierbare Verfahren, insbesondere nach der Kunststoffspritzgusstechnik, konnten sich bislang aufgrund der damit erzielbaren, unzureichenden Stabilitätswerte nicht durchsetzen.

Aus der DE 100 60 042 A1 ist ein Metall-Kunststoff-Verbundelement bekannt, zu dessen Herstellung zunächst ein metallischer Abschnitt, in dessen Metall lange Kohlefasern mit deutlichem Überstand eingebettet sind, bereitgestellt wird. Insbesondere ragen die Kohlefasern an derjenigen Oberfläche, die beim fertigen Verbundelement einen aus Kunststoff bestehenden Abschnitt kontaktieren soll, über die Metalloberfläche hinaus. Besagter Metallanschnitt wird anschließend in eine Hohlform eingelegt, in die zur Bildung des Kunststoffabschnitts ein duroplastischer Kunststoff eingespritzt und zur Aushärtung gebracht wird, wobei die überstehenden Faserbereiche in den Kunststoff eingebettet werden. Hierdurch wird die Kopplung der unterschiedlichen Materialabschnitte zwar verbessert; eine Verbesserung der Zugfestigkeit jedes einzelnen Materialabschnitts resultiert hieraus jedoch nicht.

Aus der DE 697 16 396 T2 schließlich ist eine zur Schaffung eines belastbaren Drehstabs direkt mit einem faserverstärkten Kunststoffmaterial umspritzte Stabilisierungsplatte bekannt.

### Aufgabenstellung

Es ist die Aufgabe der vorliegenden Erfindung, ein kostengünstigeres Verfahren zur Herstellung von Kurbelarmen und entsprechende Kurbelarme mit hoher Stabilität und geringem Gewicht zur Verfügung zu stellen.

### Darlegung der Erfindung

Diese Aufgabe wird in Verbindung mit den Merkmalen des Oberbegriffs von Anspruch 1 dadurch gelöst, dass der Hohlkern in Axialrichtung mehrfach mit einem an den in Axialrichtung konvex gewölbtem Seitenflächen anliegenden Kohlefaserfaden umwickelt und stoffschlüssig mit diesem verbunden ist.

Das entsprechende Herstellungsverfahren umfasst die Schritte:
- Bereitstellen eines länglichen, geschlossenen Hohlkerns aus einem ersten faserverstärkten Kunststoff mit einer Matrix aus einem ersten Thermoplasten, wobei der Hohlkern eine Vorderfläche, eine dieser gegenüberliegende Rückfläche und zwei die Vorderfläche und die Rückfläche miteinander verbindende, in Axialrichtung konvex gewölbte Seitenflächen aufweist und an seinen axialen Enden zueinander sowie zu den Seitenflächen parallel ausgerichtete, metallische Aufnahmehülsen zur Aufnahme einer Tretlagerwelle oder einer Pedalachse trägt,
- mehrfaches Umwickeln des Hohlkerns in Axialrichtung mit einem von einem Ummantelungs-Thermoplasten ummantelten Kohlefaserfaden,
- Einlegen des umwickelten Hohlkerns in ein Kunststoffspritzguss-Werkzeug,
- Umspritzen des umwickelten Hohlkerns in dem Kunststoffspritzguss-Werkzeug mit einem fasergefüllten, zweiten Thermoplasten, wobei die Temperatur des zweiten Thermoplasten und/oder des Kunststoffspritzguss-Werkzeugs so eingestellt wird, dass während des Umspritzens die Oberfläche des Hohlkerns sowie der Ummantelungs-Thermoplast auf- oder angeschmolzen werden, sodass sich eine stoffschlüssige Verbindung ergibt.

Bevorzugte Ausführungsformen der Erfindung sind Gegenstand der abhängigen Patentansprüche.

Der erfindungsgemäße Ansatz der Umwicklung des Hohlkerns in Axialrichtung mit einem stabilisierenden Kohlefaserfaden ermöglicht den Einsatz kostengünstiger Spritzgusskörper als Hohlkern. Die notwendige Biegesteifigkeit lässt sich bei derartigen Spritzgusskörpern leicht durch geeignete Rippenstrukturen, beispielsweise nach Art eines sogenannten "Nürnberger Gitters" realisieren. Die Biegesteifigkeit des Kurbelarmes resultiert somit im Wesentlichen aus der Strukturstabilität seines Hohlkerns. Als problematisch hat sich jedoch bislang die geringe Axialsteifigkeit von Spritzgusskörpern, auch solchen aus ungeordnet fasergefüllten Kunststoffen, erwiesen. Diese Axialsteifigkeit wird insbesondere im unteren Totpunkt der Kurbelbewegung gefordert. Durch die enge Umwicklung des Hohlkerns mit einem in seiner Längsrichtung extrem festen Kohlefaserfaden wird einer Dehnung des Hohlkern-Kunststoffs in axialer Richtung entgegengewirkt. Auf den Kurbelarm wirkende Biegekräfte werden somit im Wesentlichen durch die Verstärkungsstruktur des Kunststoff-Hohlkerns, Axialkräfte hingegen durch die Zugfestigkeit des Kohlefaserfadens aufgefangen.

Um eine ringsum anliegende Umwicklung des Hohlkerns zu dem Kohlefaserfaden zu ermöglichen, sind dessen Seitenflächen in Axialrichtung konvex gewölbt. Bevorzugt sind auch die axialen Enden des Hohlkerns (außerhalb der Aufnahmehülsen) gerundet und mit sich kontinuierlich an die Konvexität der Seitenflächen anschließenden Radien ausgebildet. Der Kohlefaserfaden kann bei einer solchen Formgebung somit auf seiner gesamten Länge an der äußeren Oberfläche des Hohlkerns anliegen.

Eine solche maximierte Kontaktfläche zwischen Kohlefaserfaden und Hohlkörper ist besonders vorteilhaft im Hinblick auf die erfindungsgemäße stoffschlüssige Verbindung zwischen dem Kohlefaserfaden und dem Hohlkern.

Wie erwähnt, ist es besonders bevorzugt, dass der erste faserverstärkte Kunststoff, d.h. derjenige Kunststoff, aus dem der Hohlkern gefertigt ist, eine thermoplastische Matrix aufweist. Im Hinblick auf das erfindungsgemäße Herstellungsverfahren bedeutet dies, dass als Ausgangsmaterial für den ersten faserverstärkten Kunststoff ein Thermoplast mit geeigneter Faserfüllung verwendet wird. Insbesondere hat sich hier eine Langkohlefaser-Verstärkung als günstig erwiesen, wobei unter Langfasern hier Fasern einer Länge von 5 bis 7 mm verstanden werden. Als Füllanteil für den ersten faserverstärkten Kunststoff haben sich 30 bis 40% als günstig erwiesen. Als Matrixmaterial werden aromatische Polyamide als besonders vorteilhaft angesehen.

Im Hinblick auf die Erzeugung der stoffschlüssigen Verbindung zwischen dem Kohlefaserfaden und dem Hohlkern schlägt eine besonders vorteilhafte Weiterbildung der Erfindung die Verwendung eines Thermoplast-ummantelten Kohlefaserfadens vor. Bislang bereitete die feste Verbindung aus Kohlefasern und thermoplastischem Material erhebliche Schwierigkeiten. Neuerdings sind jedoch Thermoplast-ummantelte "Endlos"-Kohlefaserfäden kommerziell erhältlich. Beispielsweise bietet die Firma EMS-Grivory seit neuestem entsprechende, sogenannte LFT-Tapes an. Es handelt sich dabei um Kohlefaser-Endlosfäden, deren Oberfläche in geeigneter Weise chemisch und/oder mechanisch vorbehandelt wurde, sodass sie eine feste, stoffschlüssige Verbindung mit einem Ummantelungs-Thermoplasten eingehen. Die Umwicklung des erfindungsgemäßen Hohlkerns mit einem solchen Thermoplast-ummantelten Kohlefaserfaden bietet die Möglichkeit einer besonders einfachen Stoffschlussverbindung zwischen dem Kohlefaserfaden und dem Hohlkern. Es bedarf nämlich lediglich eines An- oder Aufschmelzens der Hohlkern-Oberfläche einerseits und des Ummantelungs-Thermoplasten andererseits, um die gewünschte stoffschlüssige Verbindung zu erzielen. Dies kann in einem separaten Schritt erfolgen oder aber, wie entsprechend dem erfindungsgemäßen Herstellungsverfahren, im Rahmen eines wesentlich auch der Oberflächenvergütung dienenden Umspritzungsschritt.

Bei einer bevorzugten Ausführungsform der Erfindung ist nämlich vorgesehen, dass der umwickelte Hohlkern mit einem zweiten faserverstärkten Kunststoff mit thermoplastischer Matrix umhüllt ist. Diese Umhüllung erfolgt bevorzugt durch Umspritzen des in ein Kunststoffspritzgusswerkzeug eingelegten, umwickelten Hohlkerns mit einem fasergefüllten, zweiten Thermoplasten. Wird bei diesem Umspritzungsschritt die Temperatur des zweiten Thermoplasten und/oder des Kunststoffspritzgusswerkzeugs geeignet eingestellt, so lässt sich erreichen, dass während des Umspritzens die Oberfläche des Hohlkerns sowie der Ummantelung-Thermoplast auf- oder angeschmolzen werden, sodass sich die gewünschte stoffschlüssige Verbindung ergibt - und zwar zum einen zwischen Ummantelungs-Thermoplast und Hohlkern-Thermoplast, d.h. im Ergebnis zwischen Hohlkern und Kohlefaserfaden, zweitens zwischen Ummantelungs-Thermoplast und zweitem Thermoplast, d.h. im Ergebnis ebenfalls zwischen dem Kohlefaserfaden und dem zweiten Thermoplasten, und drittens zwischen erstem und zweitem Thermoplast. Bei identischer Wahl von erstem Thermoplast, zweitem Thermoplast und Ummantelungsthermoplast resultiert hieraus eine materialeinheitliche Verbindung.

Allerdings können durchaus auch Materialunterschiede der Thermoplasten realisiert werden. Insbesondere ist es bei einer bevorzugten Weiterbildung der Erfindung vorgesehen, dass der zweite faserverstärkte Kunststoff eine thermoplastische Elastomermatrix aufweist. Im Hinblick auf das erfindungsgemäße Herstellungsverfahren bedeutet dies, dass der zweite Thermoplast ein thermoplastisches Elastomer ist. Von besonderem Vorteil ist diese Variante insbesondere im MTB- und Cyclocross-Bereich, wo mit harten Schlägen durch Steine oder Äste auf die Kurbelarme zu rechnen ist. Der Elastomer-Überzug bietet hier einen effektiven Schutz der darunterliegenden, kerbschlagempfindlichen Kohlefaserfaden-Struktur. Alternativ zu einem thermoplastischen Elastomer können auch andere Thermoplaste verwendet werden. Insbesondere hat sich Polyamid 12 als vorteilhaft erwiesen.

Für die Füllung des zweiten Thermoplasten hat sich eine Füllung mit kurzen Verstärkungsfasern, d.h. Verstärkungsfasern einer Länge von 1 bis 2 mm, als günstig erwiesen. Hierdurch werden sehr glatte Oberflächen erzielt. Als Füllanteil werden auch hier 30 bis 40% als günstig angesehen. Als Fasermaterial für die Verstärkungsfasern kommen insbesondere wiederum Kohlefasern in Betracht. Insbesondere im Zusammenhang mit der Wahl eines thermoplastischen Elastomers als zweitem Thermoplasten können auch mineralische Füllmaterialien, wie beispielsweise Glas oder Talkum zum Einsatz kommen.

Hinsichtlich der detaillierten Verfahrensschritte lässt sich die Erfindung noch weiter verfeinern. So lässt sich das Umwickeln des Hohlkerns besonders leicht automatisieren und standardisieren, wenn zum Umwickeln des Hohlkerns mit dem ummantelten Kohlefaserfaden dieser mit einem Ende an den Hohlkern angeschweißt wird. Die weitere Umwicklung kann dann durch Rotation des Hohlkerns unter Beibehaltung einer vorgegebenen Spannung des Kohlefaserfadens erfolgen. Nach dem Umwickeln des Hohlkerns mit dem ummantelten Kohlefaserfaden wird dieser bevorzugt mit dem anderen Ende an den Hohlkern angeschweißt. Die weitere Handhabung des Hohlkerns ist dann völlig unproblematisch. Insbesondere ist kein versehentliches Lösen oder Abrutschen des Kohlefaserfadens vom Hohlkern mehr zu befürchten. Die Sicherheit der Verbindung kann weiter dadurch gesteigert werden, dass nach dem Umwickeln des Hohlkerns mit dem ummantelten Kohlefaserfaden dieser zwischen seinen Enden punktuell an den Hohlkern angeschweißt wird. Das Anschweißen erfolgt in allen Fällen bevorzugt mittels Ultraschall-Schweißens.

Wie oben bereits erwähnt, ist für die Biegesteifigkeit des Kurbelarms in erster Linie die Verstärkungsstruktur des Hohlkerns verantwortlich. Um einen entsprechend komplex geformten Hohlkern im bevorzugten Spritzgussverfahren zu erzeugen wird dieser bevorzugt zweiteilig ausgebildet, nämlich aus einer rippenverstärkten Wanne und einem ggf. ebenfalls rippenverstärkten Deckelelement, welches selbstverständlich selbst auch wannenförmig ausgebildet sein kann. Vor der Bereitstellung des Hohlkerns wird dieser sodann durch Verschweißen der genannten Elemente hergestellt.

Im Rahmen der Herstellung der rippenverstärkten Wanne erfolgt bevorzugt auch gleichzeitig die Fixierung der Aufnahmehülsen. Diese werden nämlich gemäß einer vorteilhaften Ausführungsform der Erfindung bei der Herstellung des Hohlkerns im Kunststoffspritzgussverfahren aus dem fasergefüllten ersten Thermoplasten mit diesem umspritzt. Mit anderen Worten erfolgt das Spritzen der rippenverstärkten Wanne unter Verwendung metallischer Einlegeelemente, welche dann die Aufnahmehülsen bilden. Die notwendige Rotations- und Translationsfestigkeit der Aufnahmehülsen kann in einfacher Weise durch geeignete nicht-symmetrische Formgebung der Einlegeelemente gewährleistet werden.

Weitere Merkmale und Vorteile der Erfindung ergeben sich aus der nachfolgenden speziellen Beschreibung und den Zeichnungen.

### Kurzbeschreibung der Zeichnungen

Es zeigen:
- Figur 1:: eine Draufsicht auf eine rippenverstärkte Wanne zur Ausbildung eines Hohlkerns,
- Figur 2:: einen Deckel zum Verschließen der Wanne gemäß Figur 1 zur Ausbildung des Hohlkerns,
- Figur 3:: eine Draufsicht auf einen aus den Elementen von Figur 1 und Figur 2 gebildeten Hohlkern,
- Figur 4:: eine Schnittdarstellung durch einen Hohlkern gemäß der Schnittlinie IV-IV in Figur 3,
- Figur 5:: der Hohlkern gemäß Figur 3 während des Umwicklungsschrittes,
- Figur 6:: eine Draufsicht auf den gemäß Figur 5 umwickelten Hohlkern,
- Figur 7:: eine Seitenansicht des umwickelten Hohlkerns gemäß Figur 6,
- Figur 8:: eine außermittig geschnittene Darstellung einer Spritzgussform mit eingelegtem, umwickelten Hohlkern zur Durchführung des Umspritzungsschrittes,
- Figur 9:: eine Draufsicht auf den aus dem in Schritt 8 gezeigten Umspritzungsschritt resultierenden Kurbelarm,
- Figur 10:: eine Schnittdarstellung durch den Kurbelarm von Figur 9 analog der Schnittlinie X-X in Figur 8.

### Ausführliche Beschreibung bevorzugter Ausführungsformen

Gleiche Bezugszeichen in den Figuren weisen auf gleiche oder analoge Elemente hin.

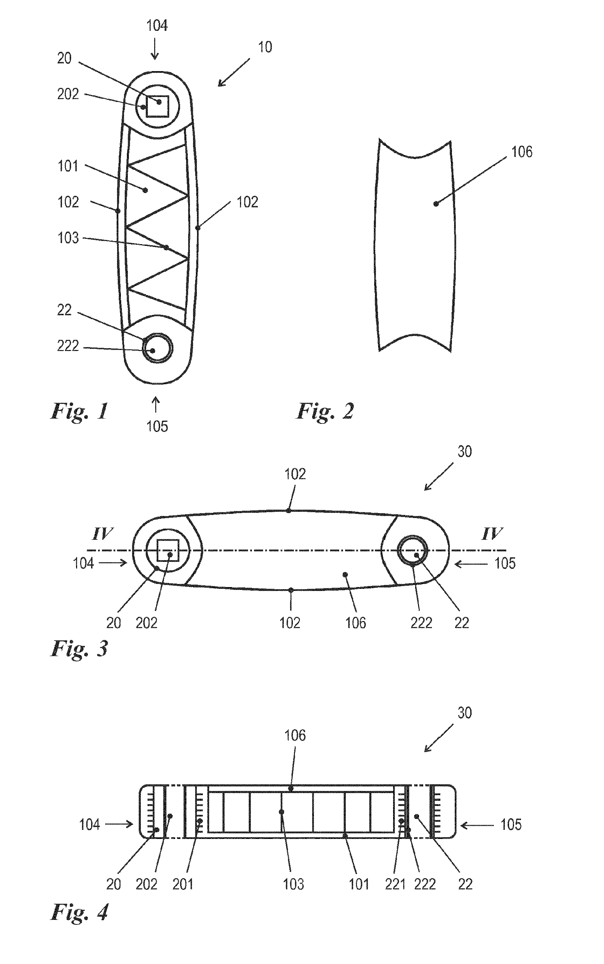

Anhand der Figuren 1 bis 10 soll nachfolgend eine vorteilhafte Ausführungsform des erfindungsgemäßen Herstellungsverfahrens erläutert werden, woraus sich wenigstens implizit auch die Eigenschaften einer vorteilhaften Ausführungsform des erfindungsgemäßen Kurbelarms ergeben.

Figur 1 stellt eine rippenverstärkte Wanne 10 dar, die im Rahmen eines Kunststoffspritzguss-Verfahrensschrittes hergestellt wurde. Die Wanne 10 zeigt eine längliche Erstreckung und ist im Wesentlichen aus einem Boden 101 und senkrecht dazu stehenden Seitenwänden 102 gebildet. Der Boden 101 und die Seitenwände 102 bilden einen Hohlraum, in dem rein schematisch eine Rippenstruktur 103 angeordnet ist, die in der Praxis z.B. nach Art eines Nürnberger Gitters ausgebildet sein kann. Die Rippenstruktur 103 ist bevorzugt im selben Kunststoffspritzgussverfahrensschritt wie der Boden 101 und die Seitenwände 102 gefertigt.

An ihren axialen Enden 104, 105 weist die Wanne 10 nicht-hohle Bereiche auf, in welche Aufnahmehülsen 20, 22 eingespritzt sind. Die Aufnahmehülsen 20, 22 werden bevorzugt als Einlegeteile in die Spritzgussform der Wanne 10 eingelegt und während des Kunststoffspritzguss-Verfahrensschrittes mit dem Kunststoffmaterial der Wanne 10 umspritzt. Wie insbesondere in der Schnittdarstellung von Figur 4 erkennbar, ist bevorzugt vorgesehen, dass die Aufnahmehülsen 20, 22 seitliche, lamellenartige Fortsätze 201, 221 aufweisen, die bevorzugt nicht-rotationssymmetrisch ausgebildet sind. Beim Umspritzen dieser Fortsätze 201, 221 ergibt sich eine Sicherung der Aufnahmehülsen 20, 22 gegen Rotation und Translation.

Die Aufnahmehülsen 20, 22 weisen bei der gezeigten Ausführungsform durchgehende Kanäle 202, 222 auf. Der Kanal 202 der in Figur 1 oberen Aufnahmehülse 20 weist ein quadratisches Profil auf und dient beim fertigen Kurbelarm der Aufnahme des Vierkants der Lagerwelle. Der Kanal 222 der in Figur 1 unteren Aufnahmehülse 22 ist mit einem runden Profil ausgestaltet und trägt in seiner Oberfläche ein Gewinde, in welches sich beim fertigen Kurbelarm die Pedalachse einschrauben lässt.

Die Aufnahmehülsen sind bevorzugt aus einem Leichtmetall, insbesondere Aluminium gefertigt. Das Material der Wanne ist bevorzugt ein langfaserverstärkter Thermoplast, besonders bevorzugt langkohlefaserverstärktes, aromatisches Polyamid.

Figur 2 zeigt einen an die Form der Öffnung der Wanne 10 angepassten Deckel 106, der in einem separaten Spritzgussprozess bevorzugt aus demselben Material, wie die Wanne 10 gefertigt ist.

Figur 3 zeigt einen Hohlkern 30, der sich durch stoffschlüssige Verbindung, insbesondere durch Verschweißen des Deckels 106 mit der Wanne 10, ergibt. Die Verbindung von Deckel 106 und Wanne 10 hat so dicht zu sein, dass in einem nachfolgenden Umspritzungsprozess kein thermoplastischer Kunststoff in den Hohlraum der Wanne 10 eindringen kann. Der Hohlkern 30 ist in Figur 3 in Draufsicht dargestellt. In Figur 4 ist er in Schnittdarstellung gemäß der Schnittlinie IV-IV in Figur 3 gezeigt.

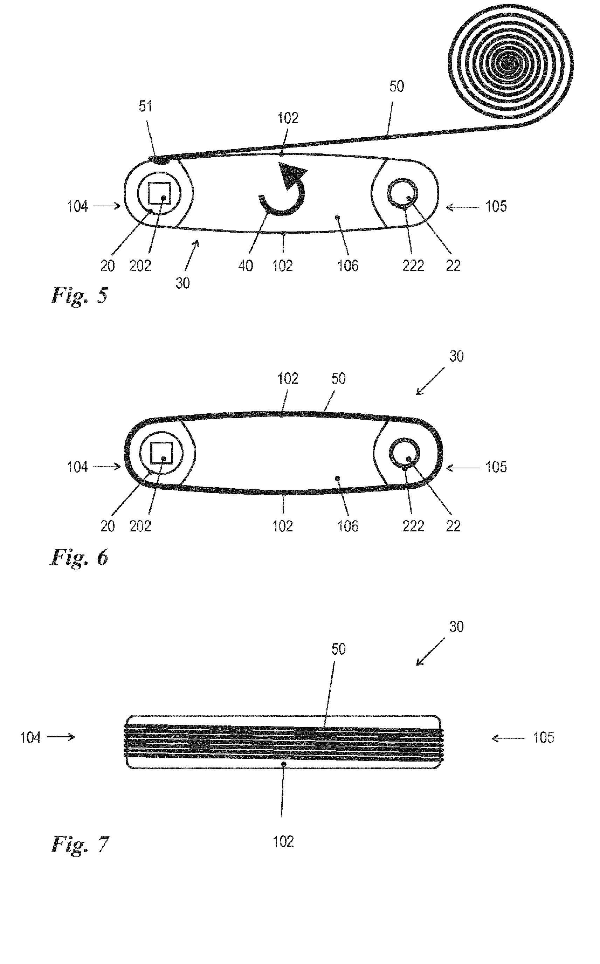

Figur 5 zeigt einen nachfolgenden Verfahrensschritt, bei dem der Hohlkern 30 in Axialrichtung mit einem Thermoplast-ummantelten Kohlefaserfaden 50 umwickelt wird. Zum Start des Verfahrensschrittes wird der Thermoplast-ummantelte Kohlefaserfaden an seinem Ende 51 mit dem Thermoplasten des Hohlkerns 30 verschweißt. Wird dann, wie durch den Rotationspfeil 40 in Figur 5 angedeutet, der Hohlkern 30 um eine parallel zu den Kanälen 202, 222 der Aufnahmehülsen 20, 22 stehende Drehachse rotiert und der Thermoplast-ummantelte Kohlefaserfaden 50 dabei unter vorbestimmtem Zug von einem Speicher abgewickelt, ergibt sich eine definiert feste Umwicklung des Hohlkerns 30 in Axialrichtung mit dem Thermoplast-ummantelten Kohlefaserfaden.

Das Ergebnis dieses Prozesses ist in den Figuren 6 und 7 dargestellt, wobei Figur 6 eine Draufsicht und Figur 7 eine Seitenansicht des umwickelten Hohlkerns 30 zeigt. In diesem Verfahrensschritt zeigt sich die besondere Bedeutung der in Axialrichtung konvex ausgebildeten Seitenflächen 102 des Hohlkerns 30 bzw. der Wanne 10. Insbesondere wenn, wie im gezeigten Ausführungsbeispiel, auch die axialen Enden 104, 105 des Hohlkerns 30 bzw. der Wanne 10 gerundet und mit sich kontinuierlich an die Konvexität der Seitenwände 102 anschließender Konvexität ausgebildet sind, liegt der Thermoplastummantelte Kohlefaserfaden 50 vollumfänglich dicht an der äußeren Oberfläche des Hohlkerns 30 an. Er bildet somit eine Schlaufe, die einer axialen Streckung des Hohlkerns 30 bzw. des fertigen Kurbelarms, der zwischen den Aufnahmehülsen 20, 22 axial belastet wird, entgegenwirkt.

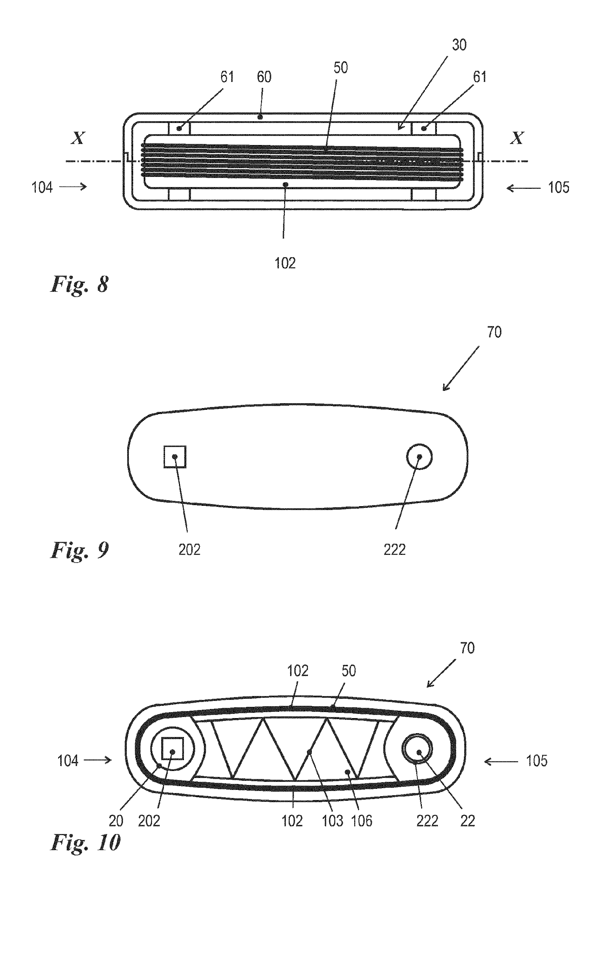

Figur 8 zeigt einen weiteren Verfahrensschritt, bei dem der umwickelte Hohlkern 30 in eine Spritzgussform 60 eingelegt wird, die bevorzugt mit Dornen 61 ausgestattet ist, welche in die Kanäle 202, 222 eingreift und diese abdichtet. Im Übrigen hat der Hohlkern 30 keinen Kontakt zu irgendeiner Wandung der Spritzgussform 60. Hieraus folgt, dass beim Füllen der Spritzgussform 60 mit einem über seine Schmelztemperatur hinaus erhitzten thermoplastischen Kunststoff eine vollständige Umspritzung des Hohlkerns 30 erfolgt, wobei jedoch die Kanäle 202, 222 offen und von außen zugänglich bleiben.

Eine Draufsicht auf einen resultierenden Kurbelarm 70 ist in Figur 9 gezeigt. Figur 10 zeigt eine Schnittdarstellung durch den Kurbelarm von Figur 9, wobei die Schnittlinie in Figur 8 als Schnittlinie X-X angedeutet ist.

Das Umspritzungsmaterial für den in Figur 8 gezeigten Umspritzungsprozess ist bevorzugt ein kurzfaserverstärkter Thermoplast, bevorzugt ein kurzkohlefaserverstärkter Thermoplast. Die kürze Faserlänge im Vergleich zur Faserlänge der Verstärkungsfasern in Wanne 10 und Deckel 106 führt zu einer glatteren Oberfläche und wird daher für diesen Schritt, der für die Stabilität des Kurbelarms 70 nur untergeordnete Bedeutung hat, bevorzugt. Als Kunststoffmatrix kann insbesondere ein thermoplastisches Elastomer verwendet werden.

Grundsätzlich ist der Fachmann bei der Wahl der Thermoplasten, d.h. des ersten Thermoplasten von Wanne 10 und Deckel 106, des Umspritzungs-Thermoplasten und des Ummantelungs-Thermoplasten für den Kohlefaserfaden 50 weitgehend frei und kann seine Wahl in Ansehung der Erfordernisse des jeweiligen Einzelfalls treffen. Allerdings bedarf es einer gewissen Abstimmung der drei Thermoplasten zueinander. Insbesondere sollen die Schmelzpunkte der drei Thermoplasten so aufeinander abgestimmt sein, dass beim Umspritzungsprozess gemäß Figur 8 die durch den Umspritzungs-Thermoplasten und ggf. die Spritzgussform 60 und/oder eine etwaige Zusatzheizung, z.B. einen Heizstrahler, eingebrachte Wärme ausreicht, um sowohl den Ummantelungsthermoplasten als auch den ersten Thermoplasten der Wanne 10 oberflächlich an- oder aufzuschmelzen, sodass sich eine stoffschlüssige Verbindung zwischen den drei Thermoplasten und damit auch zu dem Kohlefaserfaden ergibt. Selbstverständlich hat der Fachmann vor dem Hintergrund dieses Zieles auch die chemische Kompatibilität der verwendeten Thermoplasten mit in seine Überlegungen einzubeziehen. Hierzu sind jedoch lediglich dem Fachmann geläufige Überlegungen anzustellen.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben. So kann zur Unterstützung des Stoffschlusses zwischen Hohlkern 30 und Thermoplast-ummanteltem Kohlefaserfaden vorgesehen sein, dass beim Umwickeln die jeweilige Kontaktstelle unmittelbar vor der In-Kontakt-Bringung vorgeheizt und dabei an- oder aufgeschmolzen wird, beispielsweise mittels eines Wärmestrahlers oder eines Lasers.

### Bezugszeichenliste

- 10: Wanne
- 101: Boden
- 102: Seitenwand
- 103: Rippenstruktur
- 104: erstes axiales Ende
- 105: zweites axiales Ende
- 106: Deckel
- 20: erste Aufnahmehülse
- 201: Fortsätze
- 202: Kanal in 20
- 22: zweite Aufnahmehülse
- 221: Fortsätze
- 222: Kanal in 22
- 30: Hohlkern
- 40: Rotationspfeil
- 50: Kohlefaserfaden
- 51: erstes Ende von 50
- 60: Spritzgussform
- 61: Dorn
- 70: Kurbelarm

## Patentansprüche

1. Kurbelarm für ein Fahrrad-Tretkurbelsystem, umfassend einen länglichen Hohlkern (30) aus einem ersten faserverstärkten Kunststoff und mit einer in Montageendlage des Tretkurbelsystems lateral außen liegenden Vorderfläche, einer dieser gegenüberliegenden Rückfläche und zwei die Vorderfläche und die Rückfläche miteinander verbindenden Seitenflächen (102), der an seinen axialen Enden (104, 105) zueinander sowie zu den Seitenflächen (102) parallel ausgerichtete, metallische Aufnahmehülsen (20, 22) zur Aufnahme einer Tretlagerwelle oder einer Pedalachse trägt, wobei der Hohlkern (30) mit einem zweiten faserverstärkten Kunststoff ummantelt ist,
**dadurch gekennzeichnet,**
**dass** der Hohlkern (30) in Axialrichtung mehrfach mit einem an den in Axialrichtung konvex gewölbten Seitenflächen anliegenden Kohlefaserfaden (50) umwickelt und stoffschlüssig mit diesem verbunden ist.

2. Kurbelarm nach Anspruch 1,
**dadurch gekennzeichnet,**
**dass** der erste faserverstärkte Kunststoff eine thermoplastische Matrix aufweist.

3. Kurbelarm nach einem der vorangehenden Ansprüche,
**dadurch gekennzeichnet,**
**dass** der Kohlefaserfaden (50) stoffschlüssig mit dem zweiten faserverstärkten Kunststoff verbunden ist.

4. Kurbelarm nach einem der vorangehenden Ansprüche,
**dadurch gekennzeichnet,**
**dass** der zweite faserverstärkte Kunststoff eine thermoplastische Matrix aufweist.

5. Kurbelarm nach Anspruch 4,
**dadurch gekennzeichnet,**
**dass** der zweite faserverstärkte Kunststoff eine thermoplastische Elastomermatrix aufweist.

6. Verfahren zur Herstellung eines Kurbelarms für ein Fahrrad-Tretkurbelsystem, umfassend die Schritte:
- Bereitstellen eines länglichen, geschlossenen Hohlkerns (30) aus einem ersten faserverstärkten Kunststoff mit einer Matrix aus einem ersten Thermoplasten, wobei der Hohlkern (30) eine Vorderfläche, eine dieser gegenüberliegende Rückfläche und zwei die Vorderfläche und die Rückfläche miteinander verbindende, in Axialrichtung konvex gewölbte Seitenflächen (102) aufweist und an seinen axialen Enden (104, 105) zueinander sowie zu den Seitenflächen (102) parallel ausgerichtete, metallische Aufnahmehülsen (20, 22) zur Aufnahme einer Tretlagerwelle oder einer Pedalachse trägt,
- mehrfaches Umwickeln des Hohlkerns (30) in Axialrichtung mit einem von einem Ummantelungs-Thermoplasten ummantelten Kohlefaserfaden (50),
- Einlegen des umwickelten Hohlkerns (30) in ein Kunststoffspritzguss-Werkzeug (60),
- Umspritzen des umwickelten Hohlkerns (30) in dem Kunststoffspritzguss-Werkzeug (60) mit einem fasergefüllten, zweiten Thermoplasten, wobei die Temperatur des zweiten Thermoplasten und/oder des Kunststoffspritzguss-Werkzeugs so eingestellt wird, dass während des Umspritzens die Oberfläche des Hohlkerns (30) sowie der Ummantelungs-Thermoplast auf- oder angeschmolzen werden, sodass sich eine stoffschlüssige Verbindung ergibt.

7. Verfahren nach Anspruch 6,
**dadurch gekennzeichnet,**
**dass** die axialen Enden (104, 105) des Hohlkerns (30) gerundet mit sich kontinuierlich an die Konvexität der Seitenflächen (102) anschließenden Radien ausgebildet sind.

8. Verfahren nach einem der Ansprüche 6 bis 7,
**dadurch gekennzeichnet,**
**dass** zum Umwickeln des Hohlkerns (30) mit dem ummantelten Kohlefaserfaden (50) dieser mit einem Ende (51) an den Hohlkern (30) angeschweißt wird.

9. Verfahren nach einem der Ansprüche 6 bis 8,
**dadurch gekennzeichnet,**
**dass** nach dem Umwickeln des Hohlkerns (30) mit dem ummantelten Kohlefaserfaden (50) dieser mit einem anderen Ende an den Hohlkern (30) angeschweißt wird.

10. Verfahren nach einem der Ansprüche 6 bis 9,
**dadurch gekennzeichnet,**
**dass** nach dem Umwickeln des Hohlkerns (30) mit dem ummantelten Kohlefaserfaden (50) dieser zwischen seinen Enden punktuell an den Hohlkern (30) angeschweißt wird.

11. Verfahren nach einem der Ansprüche 8 bis 10,
**dadurch gekennzeichnet,**
**dass** das Anschweißen des ummantelten Kohlefaserfadens (50) an den Hohlkern (30) mittels Ultraschall-Schweißens erfolgt.

12. Verfahren nach einem der Ansprüche 6 bis 11,
**dadurch gekennzeichnet,**
**dass** vor der Bereitstellung des Hohlkerns (30) dieser durch Verschweißen eines Deckels (106) mit einer rippenverstärkten Wanne (10) hergestellt wird.

13. Verfahren nach Anspruch 12,
**dadurch gekennzeichnet,**
**dass** vor der Herstellung des Hohlkerns (30) die rippenverstärkte Wanne (10) im Kunststoffspritzgussverfahren aus dem fasergefüllten ersten Thermoplasten hergestellt wird, wobei die Aufnahmehülsen (20, 22) mit dem fasergefüllten ersten Thermoplasten umspritzt werden.

14. Verfahren nach einem der Ansprüche 6 bis 13,
**dadurch gekennzeichnet,**
**dass** der zweite Thermoplast ein thermoplastisches Elastomer ist.
